# FASCICULE DE BREVET EUROPEEN

(11) **EP 0 499 535 B1**
(45) Date de publication et mention de la délivrance du brevet: **04.01.1995**
(21) Numéro de dépôt: 92400367.6
(22) Date de dépôt: 12.02.1992
(51) Int. Cl.: F23R 3/34, F23R 3/54, F23R 3/04

(54) **Chambre de combustion pour turboréacteur à faible niveau d'émissions polluantes**
Brennkammer einer Gasturbine mit niedrigem Auspuff-Schadstoffgehalt
Gas turbine combustion chamber with low pollution exhaust

(30) Priorité: 13.02.1991 FR 9101640
(43) Date de publication de la demande: 19.08.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Barbier, Gérard Yves Georges, F-91420 Morangis (FR); Bardey, Xavier Marie Henri, F-77590 Chartrettes (FR); Desaulty, Michel André Albert, F-77240 Vert Saint Denis (FR); Meunier, Serge Marcel, F-77820 Le Chatelet en Brie (FR)

(56) Documents cités:
- DE-A- 2 412 120
- DE-C- 954 465
- GB-A- 2 010 407
- GB-A- 2 044 433

## Description

On connaît déjà une chambre de combustion, notamment pour turbo-machines, comportant : une première enceinte, munie d'un premier dispositif d'injection de carburant pour le fonctionnement à faible puissance et de premiers orifices d'admission de comburant primaire ; une deuxième enceinte, distincte de la première enceinte, munie d'un deuxième dispositif d'injection de carburant pour le fonctionnement à pleine puissance et de deuxièmes orifices d'admission de comburant primaire ; et, une troisième enceinte d'évacuation des gaz brûlés, distincte desdites première et deuxième enceintes, dans laquelle ces première et deuxième enceintes débouchent en parallèle. FR-A-2 402 068 représente une telle chambre de combustion.

Il convient de noter que, selon l'art antérieur connu, les injections des premier et deuxième dispositifs d'injection sont dirigées dans le même sens. Il en résulte un temps de transit court des gaz issus de la première enceinte et parvenant dans l'enceinte d'évacuation, et par suite une combustion incomplète et un taux élevé d'imbrûlés, si bien que la pollution provoquée par le fonctionnement de telles chambres est grande et est déjà considérée aujourd'hui comme étant excessive.

Pour remédier à cet état de choses, l'invention propose l'adoption de dispositions propres à augmenter le temps de transit des gaz brûlés dans la première enceinte. A cet effet, selon l'invention, l'injection de carburant par le premier dispositif d'injection de carburant a un sens sensiblement opposé à celui de l'injection de carburant par le deuxième dispositif d'injection de carburant.

Les avantageuses dispositions suivantes sont en outre de préférence adoptées :
- a) la paroi délimitant la première enceinte est traversée par des orifices d'admission de comburant de dilution ;
- b) la paroi délimitant la deuxième enceinte ne comporte que les seuls orifices d'admission de comburant primaire ; et
- c) la paroi délimitant la troisième enceinte d'évacuation des gaz brûlés est elle-même traversée par des orifices d'admission de comburant de dilution ;
- l'injection de carburant par le premier dispositif d'injection de carburant a un sens sensiblement opposé à celui de l'injection de carburant par le deuxième dispositif d'injection de carburant et à celui d'évacuation des gaz dans la troisième enceinte d'évacuation des gaz ;
- la deuxième enceinte et la troisième enceinte d'évacuation des gaz ont chacune un axe, les axes de ces deux enceintes étant sensiblement parallèles et dans le prolongement l'un de l'autre ;
- la paroi de la première enceinte comporte une première partie, qui constitue le support du premier dispositif d'injection de carburant, et, une deuxième partie, qui constitue un fond longitudinal de la première enceinte et qui est disposé en regard, mais distant dudit support, cependant que l'orifice par lequel ladite première enceinte communique avec la troisième enceinte d'évacuation des gaz est situé dans une troisième partie de la paroi, qui est sensiblement équidistante desdits support et fond ;
- une partie de la paroi délimitant la première enceinte raccorde cette première enceinte à la troisième enceinte d'évacuation des gaz brûlés et est constituée par une paroi double, dont l'intérieur est en communication avec une source de comburant comprimé permettant l'alimentation en comburant de la chambre de combustion ;
- ladite paroi double débouche dans la troisième enceinte d'évacuation des gaz brûlés, sensiblement tengentiellement à la paroi délimitant ladite troisième enceinte d'évacuation des gaz brûlés ;
- le mélange carburant/comburant réalisé dans la première enceinte est un mélange riche par rapport au mélange stochiométrique ;
- le mélange carburant/comburant réalisé dans la deuxième enceinte est un mélange pauvre par rapport au mélange stochiométrique.

L'avantage principal des dispositions conformes à l'invention réside, d'une part, dans l'allongement obtenu de la durée du séjour des gaz brûlés dans la première enceinte, dans l'amélioration qui en résulte de la consommation du carburant et dans la réduction des imbrûlés, d'autre part, dans l'amélioration du mélange des gaz brûlés dans les première et deuxième enceintes et dans leur dilution dans un débit important d'air de dilution.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

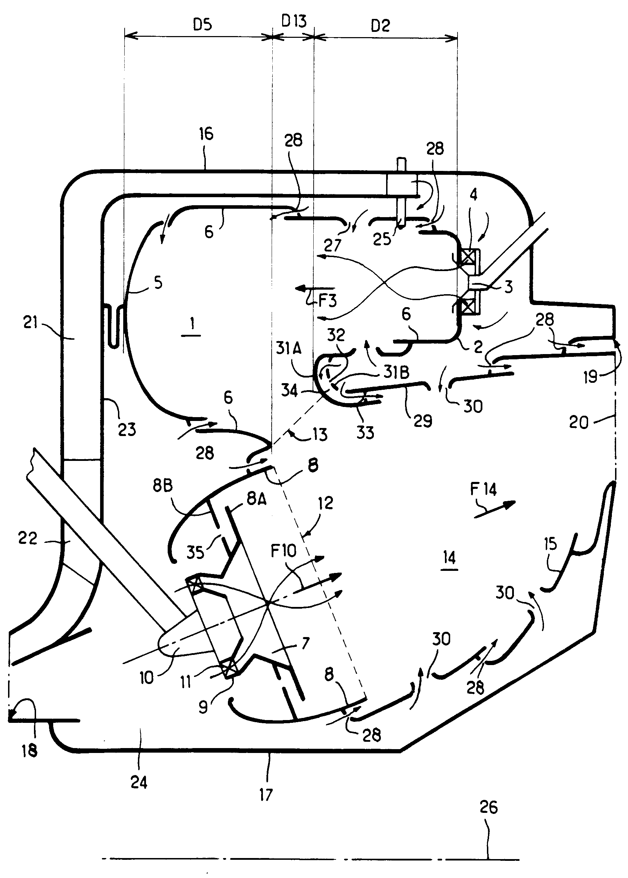

Il sera fait référence au dessin annexé, dans lequel la figure unique est une coupe axiale d'une chambre de combustion conforme à l'invention.

La chambre de combustion représentée comporte :
- une première enceinte 1 délimitée par une paroi comprenant une première partie constituant le support 2 d'un premier dispositif d'injection de carburant 3 et munie des orifices 4 d'admission de comburant primaire, par une deuxième partie, qui est disposée en regard et distante du support 2 et qui constitue le fond 5 de la première enceinte 1 et par une partie de liaison 6 desdits support 2 et fond 5 ;
- une deuxième enceinte 7 délimitée par une paroi 8, dont le fond 8A constitue le support 9 d'un deuxième dispositif d'injection de carburant 10, muni des orifices correspondants 11 d'admission de comburant primaire, et qui comprend un orifice de communication 12, la paroi 8 rejoignant la paroi 6 dans la zone d'un orifice de communication 13 ménagé dans cette paroi 6 ;
- une troisième enceinte 14, qui est délimitée par une paroi interne 15 et par une paroi externe 29, et dans laquelle débouchent la première enceinte 1 par l'orifice de communication 13 et la deuxième enceinte 7 par l'orifice de communication 12 ;
- un carter comportant une paroi externe 16 et une paroi interne 17, qui entoure lesdites première, deuxième et troisième enceintes 1, 7, 14 et est muni de deux orifices 18 et 19, l'orifice 18 étant celui d'admission générale amont de comburant comprime, en l'espèce d'air comprimé provenant d'un compresseur d'air, et l'orifice 19 étant celui traversé par la paroi 15, à proximité ce l'orifice 20 de ladite paroi 15 par lequel les gaz brûlés contenus dans la troisième enceinte 14 sont évacués hors de cette troisième enceinte.

L'espace 21 compris entre la paroi externe 16 du carter et les parties correspondantes de la paroi 6, du support 2 et du fond 5 peut contenir, comme dans l'exemple représenté, un compresseur supplémentaire 22 ; à cet effet, une paroi intermédiaire 23, intérieure au carter, sépare l'intérieur de celui-ci en deux volumes distincts : l'espace 21, et un espace 24, délimité par cette paroi intermédiaire 23, la paroi 8 et les parties restantes du fond 5 et de la paroi 6. L'espace 24 est en communication directe avec l'orifice 18 de l'admission générale amont de comburant comprimé.

Les dispositions suivantes doivent être notées :
- les sens F3 et F10 d'injection de carburant des dispositifs d'injection 3 et 10 sont sensiblement opposés, les première (1) et deuxième (7) enceintes étant disposées selon la configuration dite "à contre-courant", et débouchant toutes deux en parallèle dans la troisième enceinte 14 par leurs orifices respectifs de communication 13 et 12 ;
- une (ou plusieurs) bougie d'allumage 25 est disposée à proximité du dispositif d'injection 3 ;
- les distances D2 et D5, mesurées parallèlement à l'axe 26 des parois externe 16 et interne 17 du carter, séparant les bords limites de l'orifice de communication 13 du support 2 et du fond 5, respectivement, sont sensiblement égales, de sorte que la bande longitudinale de largeur D13, dans laquelle est disposé l'orifice de communication 13 est sensiblement équidistante du support 2 et du fond 5 ;
- dans la zone de la première enceinte 1 voisine du dispositif d'injection 3, la paroi 6 est traversée par des orifices 27 d'admission de comburant (d'air) de dilution des gaz issus de la combustion du carburant injecté par le dispositif d'injection 3 avec le comburant primaire admis à travers les orifices d'admission 4 ;
- de manière analogue, la paroi interne 15 et la paroi externe 29 de la troisième enceinte 14 sont traversées par des orifices 30 d'admission de connurent de dilution de l'ensemble des gaz transitant par cette troisième enceinte, c'est-à-dire des gaz provenant de la combustion du carburant injecté par le dispositif d'injection 10 avec le comburant primaire admis à travers les orifices d'admission 11 et des gaz provenant de la première enceinte 1 ;
- par contre, la deuxième enceinte 7 ne comporte que les seuls orifices d'admission 11 de comburant primaire, mais ne comporte pas d'orifices d'admission de comburant de dilution ;
- le dispositif d'injection 3 est celui permettant le fonctionnement de la chambre de combustion au régime de ralenti, sous faible charge, et est adapté à la réalisation d'un mélange riche par rapport au mélange stochiométrique ;
- le dispositif d'injection 10 est celui permettant le fonctionnement de la chambre de combustion à plein régime, à pleine charge, et est par contre adapté à la réalisation d'un mélange pauvre par rapport au mélange stochiométrique ;
- l'axe F14 de la troisième enceinte 14 est sensiblement parallèle, et même confondu avec l'axe F10 de l'injection de carburant réalisé par le dispositif d'injection 10 (axe F10, qui constitue sensiblement également l'axe de la deuxième enceinte 7) ;
- les parois 6 et 15 des première et troisième enceintes 1 et 14 sont constituées par des viroles assemblées les unes aux autres, munies, dans la zone de raccordement de deux adjacentes d'entre-elles, de séries d'orifices 28 d'admission de films de comourant de réfrigération des parois chaudes 6 et 15 ;
- une paroi double 31A, 31B réalise le raccordement de la paroi 6 avec la paroi externe 29, la partie 31A contribuant à délimiter l'orifice 13 de communication et les première (1) et troisième (14) enceintes, et, la partie 31B, légèrement distante de la partie 31A, coopérant à la délimitation de l'espace 21 et à la réalisation d'un passage 34, dans lequel le comburant contenu dans l'espace 21 pénètre à travers de petits orifices 32, et d'où il s'échappe tangentiellement à la paroi externe 29, vers la troisième enceinte 14, à travers des orifices 33, générateurs d'un film de comourant ce refroidissement de la partie adjacente de ladite paroi externe 29 de ladite troisième enceinte 14 ;
- le fond 8A de la paroi délimitant la deuxième enceinte 7, conformé en un bol sensiblement tronconique, est fixé sur la paroi 8 proprement dite au moyen d'un voile transversal 8B, soudé sur ces deux pièces, et muni d'orifices 35 de communication de l'espace 24 avec la deuxième enceinte 7 ;
- la troisième enceinte 14 constitue l'enceinte d'évacuation des gaz brûlés dans la première enceinte 1 et, éventuellement, au régime de pleine charge, dans la deuxième enceinte 7.

Les deux régimes extrêmes de fonctionnement sont celui du ralenti, avec seulement le premier dispositif d'injection de carburant 3 en service, et celui de la pleine charge où le deuxième dispositif d'injection de carburant 10 est également en service.

Les dispositions de l'invention représentée permettent une combustion d'un mélange riche dans la première enceinte 1, peu polluante, et stable en raison de la configuration à contre-courant de l'injection (F3) dans cette enceinte par rapport au sens F14 d'évacuation des gaz brûlés hors de l'enceinte 14.

Ces dispositions permettent également un fonctionnement peu polluant au régime de pleine charge, lesdits régimes de ralenti et de pleine charge correspondant à des mélanges, l'un riche, l'autre pauvre, tous deux éloignés du mélange stochiométrique le plus polluant. De plus, la combustion au fonctionnement de pleine charge est réalisée avec un mélange pauvre très homogène, stable également.

Les dispositifs d'admission de comburant primaire 4 et 11 peuvent bien entendu être à "géométrie variable", c'est-à-dire être munis de dispositifs ce réglage de leur section d'admission du comburant, et donc du débit de celui-ci.

Le comburant nécessaire au fonctionnement de la tête "plein gaz" pénètre de façon classique à partir de l'espace 24 tandis qu'une partie de ce comburant nécessaire au fonctionnement de la tête "ralenti" est prélevée dans l'espace 21 de diffusion. Pour alimenter correctement la tête "ralenti", l'étage supplémentaire de compression 22 (radial ou axial) est éventuellement adopté, selon ce qui est représenté sur le dessin.

## Revendications

1. Chambre de combustion, notamment pour turbo-machine, comportant :
- une première enceinte (1), munie d'un premier dispositif (3) d'injection de carburant pour le fonctionnement à faible puissance et de premiers orifices (4) d'admission de comburant primaire ;
- une deuxième enceinte (7), distincte de la première enceinte, munie d'un deuxième dispositif (10) d'injection de carburant pour le fonctionnement à pleine puissance et de deuxièmes orifices (11) d'admission de comburant primaire ; et,
- une troisième enceinte (14) d'évacuation des gaz brûlés, distincte desdites première et deuxième enceintes, dans laquelle ces première et deuxième enceintes débouchent en parallèle,
caractérisée en ce que l'injection de carburant par le premier dispositif (3) d'injection de carburant a un sens (F3) sensiblement opposé à celui (F10) de l'injection de carburant par le deuxième dispositif (10) d'injection de carburant.

2. Chambre de combustion selon la revendication 1, caractérisée en ce que :
a) la paroi (2-6-5) délimitant la première enceinte (1) est traversée par des orifices (27) d'admission de comburant de dilution ;
b) la paroi (8-8A-8B) délimitant la deuxième enceinte (7) ne comporte que les seuls orifices (11) d'admission de comburant primaire : et,
c)la paroi (15-29) délimitant la troisième enceinte (14) d'évacuation des gaz brûlés est elle-même traversée par des orifices (30) d'admission de comburant de dilution.

3. Chambre de combustion selon l'une quelconque des revendication 1 et 2, caractérisée en ce que l'injection de carburant par le premier dispositif (3) d'injection de carburant a un sens (F3) sensiblement opposé à celui (F10) de l'injection de carburant par le deuxième orifice (10) d'injection de carburant et à celui (F14) d'évacuation des gaz dans la troisième enceinte (14) d'évacuation des gaz.

4. Chambre de combustion selon la revendication 3, caractérisée en ce que la deuxième enceinte (7) et la troisième enceinte (14) d'évacuation des gaz ont chacune un axe, les axes (F10, F14) de ces deux enceintes étant sensiblement parallèles et dans le prolongement l'un de l'autre.

5. Chambre de combustion selon l'une quelconque des revendications 1 à 4, caractérisée en ce que la paroi de la première enceinte comporte une première partie (2), qui constitue le support du premier dispositif (3) d'injection de carburant, et, une deuxième partie (5), qui constitue un fond longitudinal de la première enceinte et qui est disposé en regard, mais distant dudit support, cependant que l'orifice (13) par lequel ladite première enceinte (1) communique avec la troisième enceinte (14) d'évacuation des gaz est situé dans une troisième partie (6) de la paroi, qui est sensiblement équidistante (D5, D2) desdits support (2) et fond (5).

6. Chambre de combustion selon la revendication 5, caractérisée en ce qu'une partie (31A - 31B) de la paroi délimitant la première enceinte (1) raccorde cette première enceinte à la troisième enceinte (14) d'évacuation des gaz brûlés et est constituée par une paroi double, dont l'intérieur (31B) est en communication avec une source (21) de comburant comprimé permettant l'alimentation en comburant de la chambre de combustion.

7. Chambre de combustion selon la revendication 6, caractérisée en ce que ladite paroi double débouche (33) dans la troisième enceinte (14) d'évacuation des gaz brûlés, sensiblement tangentiellement à la paroi (29) délimitant ladite troisième enceinte d'évacuation des gaz brûlés.

8. Chambre de combustion selon l'une quelconque des revendications 1 à 7, caractérisée en ce que le mélange carburant/comburant réalisé dans la premiére enceinte (1) est un mélange riche par rapport au mélange stochiométrique.

9. Chambre de combustion selon l'une quelconque des revendications 1 à 8, caractérisée en ce que le mélange carburant/comburant réalisé dans la deuxième enceinte (7) est un mélange pauvre par rapport au mélange stochiométrique.

## Claims

1. Combustion chamber, particularly for a turbo-machine, including:
- a first enclosure (1), equipped with a first fuel injection device (3) for operation at low power and with first primary oxidizer intake orifices (4);
- a second enclosure (7), distinct from the first enclosure, equipped with a second fuel injection device (10) for operation at full power with second primary oxidizer intake orifices (11); and,
- a third enclosure (14) for outlet of the burnt gases, distinct from the said first and second enclosures, in which these first and second enclosures emerge in parallel,
characterized in that the injection of fuel by the first fuel injection device (3) has a direction (F3) substantially opposed to that (F10) of the injection of fuel by the second fuel injection device (10).

2. Combustion chamber according to Claim 1, characterized in that:
a) the wall (2-6-5) delimiting the first enclosure (1) has dilution oxidizer intake orifices (27) passing through it;
b) the wall (8-8A-8B) delimiting the second enclosure (7) includes just the primary oxidizer intake orifices (11) alone: and,
c) the wall (15-29) delimiting the third enclosure (14) for outlet of the burnt gases itself has dilution oxidizer intake orifices (30) passing through it.

3. Combustion chamber according to any one of Claims 1 and 2, characterized in that the injection of fuel by the first fuel injection device (3) has a direction (F3) substantially opposed to the one (F10) for the injection of fuel through the second fuel injection orifice (10) and the one (F14) for outlet of the gases into the third enclosure (14) for outlet of the gases.

4. Combustion chamber according to Claim 3, characterized in that the second enclosure (7) and the third enclosure (14) for outlet of the gases each have an axis, the axes (F10, F14) of these two enclosures being substantially parallel and in the extension of one another.

5. Combustion chamber according to any one of Claims 1 to 4, characterized in that the wall of the first enclosure includes a first part (2) which constitutes the support for the first fuel injection device (3) and a second part (5) which constitutes a longitudinal end face of the first enclosure and which is located facing, but distant from the said support, whereas the orifice (13) via which the said first enclosure (1) communicates with the third enclosure (14) for outlet of the gases is situated in a third part (6) of the wall which is substantially equidistant (D5, D2) from the said support (2) and the said end face (5).

6. Combustion chamber according to Claim 5, characterized in that a part (31A-31B) of the wall delimiting the first enclosure (1) couples this first enclosure to the third enclosure (14) for outlet of the burnt gases and is made up by a double wall, the inside (31B) of which is in communication with a source (21) of compressed oxidizer allowing the combustion chamber to be supplied with oxidizer.

7. Combustion chamber according to Claim 6, characterized in that the said double wall emerges (33) in the third enclosure (14) for outlet of the burnt gases, substantially tangentially to the wall (29) delimiting the said third enclosure for outlet of the burnt gases.

8. Combustion chamber according to any one of Claims 1 to 7, characterized in that the fuel/oxidizer mixture produced in the first enclosure (1) is a mixture which is very rich by comparison with the stoichiometric mixture.

9. Combustion chamber according to any one of Claims 1 to 8, characterized in that the fuel/oxidizer mixture produced in the second enclosure (7) is a mixture which is lean by comparison with the stoichiometric mixture.

## Patentansprüche

1. Brennkammer, insbesondere für ein Strahltriebwerk, aufweisend:
- einen ersten Raum (1), der mit einer Brennstoffeinspritzvorrichtung (3) zum Betrieb mit niedriger Leistung und mit ersten Öffnungen (4) zum Einlaß eines ersten Verbrennungsmittels versehen ist;
- einen zweiten Raum (7), der von dem ersten Raum getrennt ist und mit einer zweiten Brennstoffeinspritzvorrichtung (10) zum Betrieb mit voller Leistung und mit zweiten Öffnungen (11) zum Einlaß eines ersten Verbrennungsmittels versehen ist, und
- einen dritten Raum (14) zum Auslaß der verbrannten Gase, der getrennt von dem ersten und dem Zweiten Raum ist und in den der erste und der zweite Raum parallel münden,
dadurch **gekennzeichnet**,
daß die Brennstoffeinspritzung durch die erste Brennstoffeinspritzvorrichtung (3) in einer Richtung (F3) im wesentlichen entgegengesetzt zu der (F 10) der Einspritzung durch die zweite Brennstoffeinspritzvorrichtung (10) erfolgt.

2. Brennkammer nach Anspruch 1,
dadurch **gekennzeichnet**, daß
a) durch die Wand (2-6-5), die den ersten Raum (1) abtrennt, Einlaßöffnungen (27) für ein Verdünnungsverbrennungsmittel hindurchgehen,
b) die Wand (8-8A-8B), die den zweiten Raum (7) abgrenzt, nur die einzigen Öffnungen (11) zum Einlaß eines ersten Verbrennungsmittels aufweist, und
c) durch die Wand (15-29) selbst, die den dritten Raum (14) zum Auslaß der verbrannten Gase abgrenzt, Öffnungen (30) zum Einlaß des Verdünnungsverbrennungsmittel hindurchgehen.

3. Brennkammer nach einem der Ansprüche 1 oder 2,
dadurch **gekennzeichnet,**
daß die Brennstoffeinspritzung durch die erste Brennstoffeinspritzvorrichtung (3) in einer Richtung (F3) im wesentlichen entgegengesetzt zu der (F10) der Brennstoffeinspritzung durch die zweite Brennstoffeinspritzöffnung (10) und zu der (F14) des Gasauslasses in dem dritten Raum (14) zum Gasauslaß erfolgt.

4. Brennkammer nach Anspruch 3,
dadurch **gekennzeichnet**,
daß der zweite Raum (7) und der dritte Raum (14) zum Gasauslaß jeweils eine Achse aufweisen, wobei die Achsen (F10, F14) dieser beiden Räume im wesentlichen parallel und fluchtend zueinander vorgesehen sind.

5. Brennkammer nach einem der Ansprüche 1 bis 4,
dadurch **gekennzeichnet**,
daß die Wand des ersten Raums einen ersten Abschnitt (2), der die Halterung für die erste Brennstoffeinspritzvorrichtung (3) bildet, und einen zweiten Abschnitt (5) aufweist, der einen ersten Längsboden des ersten Raums bildet und der gegenüber, jedoch beabstandet von der Halterung vorgesehen ist, wobei indessen die Öffnung (13), durch die der erste Raum (1) mit dem dritten Raum (14) zum Gasauslaß verbunden ist, in einem dritten Abschnitt (6) der Wand liegt, der im wesentlichen gleich weit entfernt (D5,D2) von der Halterung (2) und dem Boden (5) ist.

6. Brennkammer nach Anspruch 5,
dadurch **gekennzeichnet**,
daß ein Teil (31A - 31B) der Wand, die den ersten Raum (1) abgrenzt, diesen ersten Raum mit dem dritten Raum (14) zum Auslaß der verbrannten Gase verbindet und durch eine Doppelwand gebildet ist, deren Innenseite (31B) mit einer Quelle (21) für ein komprimiertes Verbrennungsmittel verbunden ist, die die Versorgung der Brennkammer mit dem Verbrennungsmittel gestattet.

7. Brennkammer nach Anspruch 6,
dadurch **gekennzeichnet**,
daß die Doppelwand in den dritten Raum (14) zum Auslaß der verbrannten Gase (33) im wesentlichen tangential zu der Wand (29), die den dritten Raum zum Ablaß der verbrannten Gase abgrenzt, mündet.

8. Brennkammer nach einem der Ansprüche 1 bis 7,
dadurch **gekennzeichnet**,
daß die Mischung Brennstoff/Verbrennungsmittel, die in dem ersten Raum (1) ausgeführt wird, eine im Verhältnis zur stöchiometrischen Mischung fette Mischung ist.

9. Brennkammer nach einem der Ansprüche 1 bis 8,
dadurch **gekennzeichnet**,
daß die Mischung Brennstoff/Verbrennungsmittel, die in dem zweiten Raum (7) durchgeführt wird, eine bezüglich des stöchiometrischen Verhältnisses magere Mischung ist.
